# EUROPEAN PATENT SPECIFICATION

(11) **EP 4 000 922 B1**
(45) Date of publication and mention of the grant of the patent: **30.04.2025**
(21) Application number: 20383012.0
(22) Date of filing: 20.11.2020
(51) Int. Cl.: B32B 25/04, B32B 27/08, B32B 27/32, C08J 5/18

(54) **MULTILAYER FILMS HAVING AT LEAST ONE MATTE SURFACE**
MULTILAYER-FILME MIT MINDESTENS EINER MATTE-OBERFLÄCHE
FILMS MULTICOUCHES AYANT AU MOINS UNE SURFACE MATTE

(43) Date of publication of application: 25.05.2022
(73) Proprietor: Dow Global Technologies LLC, Midland, MI 48674 (US)
(72) Inventor: HENTSCHEL, Thomas, 43006 Tarragona (ES); ALVAREZ ACEDO, Eduardo, 43006 Tarragona (ES); SANDKUEHLER, Peter, 8810 Horgen (CH)
(74) Representative: Elzaburu S.L.P.

(56) References cited:
- EP-A2- 2 447 321
- WO-A1-2017/003543
- WO-A1-2020/000340
- WO-A1-2020/142230
- US-A1- 2011 076 463

## Description

### Field

This disclosure relates to multilayer films having at least one matte surface and to articles, such as labels and packages, comprising multilayer films having at least one matte surface. WO2017003543 relates to polymer films which deliver a more consistent matte surface achieved by blending at least two compatible polyethylenes.

### Introduction

Polymer films having a matte surface are commonly used in a variety of applications. Optical properties, such as matte surface, may be defined in terms of surface gloss and haze. A matte surface may be characterized by lower gloss and higher haze values as discussed further herein.

Packaging applications, such as pouches and bags for pet food, snack food, sometime utilize polymer films having a matte surface. The matte surface can be obtained through blends of incompatible polyolefins, generally by using blends of polyethylene and polypropylene. However, these incompatible blends of polyethylene and polypropylene create issues with process control. Specifically, when using different machine procedures for blending the incompatible polyolefins, the properties of the film product may be unpredictable and inconsistent.

There is also interest in polyethylene films having a matte surface for use in labels. The development of labels has been traditionally focused on improving the homogeneity of the material together with the product or surface. Traditionally, mostly glossy labels were considered professional and of high quality. However, the marketplace is changing and naturally appearing, non-shiny textures are increasingly important. For example, labels having a non-glossy finish have been used to transport a message of high quality, organic products in some instances. A common approach to provide natural looking surfaces and natural appearance is to provide rough surfaces. This can be done by using inorganic fillers, but can also worsen the mechanical properties of the label.

There remains a need for new multilayer films having a matte surface and acceptable mechanical properties that can be used in labels and/or packaging applications.

### Summary

The present invention provides multilayer films that have a matte surface and that, in some embodiments, have desirable mechanical properties. In some embodiments, multilayer films of the present invention have particularly low surface gloss values in an outer layer to provide a matte surface. In some embodiments, multilayer films of the present invention have particularly low gloss values in an outer surface while maintaining desirable mechanical properties. In addition to providing a desirable appearance for some applications, multilayer films of the present invention having a matte surface can provide other advantages in some embodiments, such as reduced blocking and/or potential improved adhesion in lamination.

In one aspect, the present invention provides a multilayer film having at least one matte surface that comprises (a) an outer layer comprising (i) 30 to 99.5 weight percent of a first low density polyethylene having a density of 0.919 g/cm³ to 0.940 g/cm³ and a melt index (I₂) of 0.3 to 5 g/10 minutes, (ii) 0.1 to 20 weight percent of polymer particles having a core and a shell structure wherein the core comprises a first polymeric material being elastomeric and having a first refractive index and the shell comprises a second polymeric material being thermoplastic having a second refractive index that is different from the first refractive index, wherein the refractive index of the polymer in the core differs from the refractive index of the polymer in the shell by at least 0.02 or at least 0.03, and (iii) optionally, up to 50 weight percent of a first polyethylene having a density of 0.925 g/cm³ to 0.970 g/cm³ and a melt index (I₂) of 0.8 to 10 g/10 minutes, each based on the total weight of the outer layer; and (b) a second layer in adhering contact with the outer layer comprising (i) 1 to 80 weight percent of a second low density polyethylene having a density of 0.919 g/cm³ to 0.940 g/cm³ and a melt index (I₂) of 0.3 to 5 g/10 minutes, and (ii) 20 to 99 weight percent of a second polyethylene having a density of 0.925 g/cm³ to 0.970 g/cm³ and a melt index (I₂) of 0.8 to 10 g/10 minutes, each based on the total weight of the second layer; wherein the outer layer has a gloss of less than 50% as measured by ASTM D2457 at an angle of 45°.

As discussed below, the present invention also provides articles, such as labels and packages, formed from any of the inventive multilayer films disclosed herein.

These and other embodiments are described in more detail in the Detailed Description.

### Detailed Description

Unless stated to the contrary, implicit from the context, or customary in the art, all parts and percents are based on weight, all temperatures are in ° C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or a polymer mixture, including mixtures of polymers that are formed *in situ* during polymerization.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

The term, "ethylene/α-olefin interpolymer," as used herein, refers to an interpolymer that comprises, in polymerized form, a majority amount (>50 mol %) of units derived from ethylene monomer, and the remaining units derived from one or more α-olefins. Typical α-olefins used in forming ethylene/α-olefin interpolymers are C₃-C₁₀ alkenes.

The term, "ethylene/α-olefin copolymer," as used herein, refers to a copolymer that comprises, in polymerized form, a majority amount (>50 mol %) of ethylene monomer, and an α-olefin, as the only two monomer types.

The term "α-olefin", as used herein, refers to an alkene having a double bond at the primary or alpha (α) position.

"Polyethylene" or "ethylene-based polymer" shall mean polymers comprising a majority amount (>50 mol %) of units which have been derived from ethylene monomer. This includes polyethylene homopolymers, ethylene/α-olefin interpolymers, and ethylene/α-olefin copolymers. Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); Medium Density Polyethylene (MDPE); High Density Polyethylene (HDPE); Enhanced Polyethylene; polyethylene elastomers; and polyethylene plastomers. These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US4599392). LDPE resins typically have a density in the range of 0.916 to 0.935 g/cm³.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE"), constrained geometry catalysts (CGC), and molecular catalysts. Resins include linear, substantially linear, or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.940 g/cm³. "MDPE" is typically made using chromium or Ziegler-Natta catalysts or using single-site catalysts including, but not limited to, bis-metallocene catalysts, constrained geometry catalysts, and molecular catalysts, and typically have a molecular weight distribution ("MWD") greater than 2.5.

The term "HDPE" refers to polyethylenes having densities greater than about 0.940 g/cm³ and up to about 0.970 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

"Polyethylene plastomers/elastomers" are substantially linear, or linear, ethylene/α-olefin copolymers containing homogeneous short-chain branching distributions comprising units derived from ethylene and units derived from at least one C₃-C₁₀ α-olefin comonomer, or at least one C₄-C₈ α-olefin comonomer, or at least one C₆-C₈ α-olefin comonomer. Polyethylene plastomers/elastomers have a density from 0.870 g/cm³, or 0.880 g/ cm³, or 0.890 g/ cm³ to 0.900 g/ cm³, or 0.902 g/ cm³, or 0.904 g/ cm³, or 0.909 g/ cm³, or 0.910 g/ cm³, or 0.917 g/ cm³. Nonlimiting examples of polyethylene plastomers/ elastomers include AFFINITY^{™} plastomers and elastomers (available from The Dow Chemical Company), EXACT Plastomers (available from ExxonMobil Chemical), Tafmer (available from Mitsui), Nexlene^{™} (available from SK Chemicals Co.), and Lucene (available LG Chem Ltd.).

"Blend", "polymer blend" mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

The term "in adhering contact" mean that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

The present invention relates to multilayer films having at least one matte surface and to labels and packages formed from such multilayer films. The matte surface can provide a desirable appearance and in some embodiments, the multilayer films can also have desirable mechanical properties.

In one embodiment, the present invention provides a multilayer film having at least one matte surface that comprises (a) an outer layer comprising (i) 30 to 99.5 weight percent of a first low density polyethylene having a density of 0.919 g/cm³ to 0.940 g/cm³ and a melt index (I₂) of 0.3 to 5 g/10 minutes, (ii) 0.1 to 20 weight percent of polymer particles having a core and a shell structure wherein the core comprises a first polymeric material being elastomeric and having a first refractive index and the shell comprises a second polymeric material being thermoplastic having a second refractive index that is different from the first refractive index, wherein the refractive index of the polymer in the core differs from the refractive index of the polymer in the shell by at least 0.02 or at least 0.03, and (iii) optionally, up to 50 weight percent of a first polyethylene having a density of 0.925 g/cm³ to 0.970 g/cm³ and a melt index (I₂) of 0.8 to 10 g/10 minutes, each based on the total weight of the outer layer; and (b) a second layer in adhering contact with the outer layer comprising (i) 1 to 80 weight percent of a second low density polyethylene having a density of 0.919 g/cm³ to 0.940 g/cm³ and a melt index (I₂) of 0.3 to 5 g/10 minutes, and (ii) 20 to 99 weight percent of a second polyethylene having a density of 0.925 g/cm³ to 0.970 g/cm³ and a melt index (I₂) of 0.8 to 10 g/10 minutes, each based on the total weight of the second layer; wherein the outer layer has a gloss of less than 50% as measured by ASTM D2457 at an angle of 45°. In some embodiments, outer layer comprises 80 to 90 weight percent of the first low density polyethylene, based on the weight of the outer layer. In some embodiments, the first low density polyethylene in the outer layer has a density of 0.930 to 0.940 g/cm³ and/or a melt index (I₂) of 2.5 to 4 g/10 minutes. In some embodiments, the first polyethylene is present in the outer layer in an amount up to 50 weight percent. In some embodiments, the first polyethylene is present in the outer layer in an amount up to 20 weight percent. In some embodiments, the first polyethylene in the outer layer has a density of 0.60 to 0.970 g/cm³ and a melt index (I₂) of 6 to 10 g/10 minutes.

In some embodiments, the first polymeric material of the core of the polymer particle is elastomeric and the second polymeric material of the shell of the polymer particle is a thermoplastic. The shell, in some embodiments, comprises an acrylic polymer. In some embodiments, the polymer particles have an average size of 1 to 10 microns.

The outer layer, in some embodiments, further comprises a compatibilizer. The compatibilizer when present, in some embodiments, is a polyolefin copolymer with acrylic acid, a polyolefin copolymer with an acrylate, a polyolefin copolymer with a maleic anhydride ester, or a polyolefin copolymer grafted with one or more anhydride group, acrylate group or carboxylic acid group. In some embodiments, the compatibilizer is maleic anhydride grafted low density polyethylene or a maleic anhydride grafted high density polyethylene. In some embodiments, the compatibilizer is present in the outer layer in an amount up to 10 weight percent based on the total weight of the outer layer.

In some embodiments, the first polyethylene (in the outer layer) and the second polyethylene (in the second layer) are each high density polyethylene.

The present invention also provides articles, such as labels and packages, formed from any of the inventive multilayer films disclosed herein.

### Outer Layer

The outer layer in a multilayer film advantageously provides a matte surface. As used herein, the term "matte surface" refers to a surface with a dull appearance, as opposed to a glossy appearance. A matte surface has one or both of (1) a gloss of less than 50%, and (2) a haze of greater than 45%. In some embodiments, the outer layer has a gloss of less than 50% as measured by ASTM D2457 at an angle of 45°. In some embodiments, the outer layer has a gloss of less than 45% as measured by ASTM D2457 at an angle of 45°. In some embodiments, the outer layer has a haze of greater than 45% as measured by ASTM D1003. In some embodiments, the outer layer has a haze of greater than 50% as measured by ASTM D1003. In some embodiments, the outer layer has a haze of greater than 55% as measured by ASTM D1003.

To provide the matte surface, the outer layer comprises (i) 30 to 99.5 weight percent of a first low density polyethylene having a density of 0.919 g/cm³ to 0.940 g/cm³ and a melt index (I₂) of 0.3 to 5 g/10 minutes, and (ii) 0.1 to 20 weight percent of polymer particles having a core and a shell structure wherein the core comprises a first polymeric material having a first refractive index and the shell comprises a second polymeric material having a second refractive index that is different from the first refractive index, each based on the total weight of the outer layer. In some embodiments, the outer layer further comprises up to 50 weight percent of a first polyethylene having a density of 0.925 g/cm³ to 0.970 g/cm³ and a melt index (I₂) of 0.8 to 10 g/10 minutes, based on the total weight of the outer layer. In some embodiments, the outer layer further comprises a compatibilizer.

The outer layer includes a first low density polyethylene having a density of 0.919 to 0.940 g/cm³. All individual values and subranges of 0.919 to 0.940 g/cm³ are included herein and disclosed herein; for example, the density of the low density polyethylene can be from a lower limit of 0.919, 0.920, 0.922, 0.925, 0.927, 0.929, or 0.930 g/ cm³ to an upper limit of 0.925, 0.930, 0.935, or 0.940 g/cm³. In some embodiments, the low density polyethylene has a density of 0.930 to 0.940 g/cm³.

In some embodiments, the low density polyethylene has a melt index (I₂) 0.3 to 5 g/10 minutes. All individual values and subranges from 0.3 to 5 g/10 minutes are included herein and disclosed herein. For example, the low density polyethylene can have an I₂ from a lower limit of 0.3, 0.5, 0.7, 0.9, 1.0, 1.2, 1.5, 1.8, 2.0, 2.3, 2.5, 2.7, 3.0, 3.3, or 3.5 g/10 minutes to an upper limit of 2.0, 2.5, 2.8, 3.0, 3.2, 3.5, 3.7, 4.0, 4.2, 4.5, 4.8, or 5 g/10 minutes. For example, the low density polyethylene can have an I₂ of 2.5 to 4.0 g/10 minutes.

The outer layer comprises from 30 to 99.5 wt% of the low density polyethylene, based on the total weight of the outer layer. All individual values and subranges from 30 to 99.5 percent by weight (wt%) are included herein and disclosed herein; for example the amount of the low density polyethylene can be from a lower limit of 30, 35, 40, 45, 50, 55, 60, 65, 70, 76, 80, 85, or 90 wt% to an upper limit of 50, 55, 60, 65, 70, 75, 80, 85, 90, 92, 94, 96, 98, 99, or 99.5 wt%. For example, the amount of the low density polyethylene can be from 50 to 95 wt%, or in the alternative, from 70 to 95 wt%, or in the alternative, from 70 to 90 wt%, or in the alternative from 80 to 90 wt%.

Examples of low density polyethylenes that can be used in the outer layer in some embodiments include DOW^{™} low density polyethylenes (LDPE) commercially available from The Dow Chemical Company, such as DOW^{™} LDPE 525E, DOW^{™} LDPE 410E, DOW^{™} LDPE 421E, DOW^{™} LDPE 545E, DOW^{™} LDPE 555E, and DOW^{™} LDPE 515E.

In addition to the LDPE, the outer layer also comprises 0.1 to 20 weight percent of polymer particles having a core and a shell structure wherein the core comprises a first polymeric material having a first refractive index and the shell comprises a second polymeric material having a second refractive index that is different from the first refractive index.

The core/shell polymeric particles are present in amounts of at least 0.1, at least 0.5, or at least 1 weight percent based on total weight of the outer layer. The core/shell polymeric particles are present in amounts of no more than 20, no more than 15, no more than 10, no more than 7, or no more than 5 weight percent based on total weight of the outer layer. The particles can have an average particle size of at least 1 micron and no more than 10 microns. Particle size can be determined by using conventional methods, e.g. use of a particle sizer such as Model BI-90 from Brookhaven Instrument. Particle size can be measured in powder state. Particle size can show the size of agglomerated core shell particles. Core-shell particles may be purchased with a nominal particle size as specified by the vendor. The core/shell particles can be formed from acrylic monomers such as butyl acrylate, 2-ethylhexyl acrylate and lauryl methacrylate.

The core/shell polymeric particles can be characterized in that polymer in the core has a different refractive index from the refractive index of the polymer in the shell. For example, the refractive index of the polymer in the core can differ from the refractive index of the polymer in the shell by at least 0.02 or at least 0.03. Refractive index can be measured using a refractometer and following ASTM D542. The core shell material can be pressed into a thin film by hot press to facilitate this measurement.

The core/shell particles can have an elastomeric core with a thermoplastic shell. For example, the particle can have a rubber particle core formed by a polymer comprising an elastomeric or rubbery polymer as a main ingredient, optionally an intermediate layer formed with a monomer having two or more double bonds and coated on the core layer, and a shell layer formed by a polymer graft polymerized on the core or on an intermediate layer. The shell layer partially or entirely covers the surface of the rubber particle core by graft polymerizing a monomer to the core. At least 30%, at least 40%, at least 50% or at least 60% up to 95, up to 90 up to 85 or up to 80% of the weight of the particle can be the core.

Generally, the polymer constituting the rubber particle core can have a glass transition temperature (T_{g}) of 0° C or lower or -30° C or lower. T_{g} can be determined by DSC measurement or can be calculated for copolymers using the Fox equation [Bulletin of the American Physical Society 1, 3 Page 123 (1956)] as follows: 1 T_{g} = w₁ x T_{g(1)} + w₂ T _{g(2)}. For a copolymer, w₁ and w₂ refer to the weight fraction of the two comonomers, and T_{g(1)} and T_{g(2)} refer to the glass transition temperatures of the two corresponding homopolymers in Kelvin. For polymers containing three or more monomers, additional terms are added (wₙ and T_{g(n)}). The T_{g} of a polymer phase can also be calculated by using the appropriate values for the glass transition temperatures of homopolymers, which may be found, for example, in "Polymer Handbook", edited by J. Brandrup and E. H. Immergut, Interscience Publishers.

The polymer constituting the rubber particle core can be made from an elastomeric material comprising from 50 weight percent to 100 weight percent of at least one member selected from diene monomers (conjugated diene monomers) and (meth)acrylic acid ester monomers and 0 to 50 weight percent of other copolymerizable vinyl monomers, polysiloxane type elastomers or combinations thereof wherein the weight percents are based on total weight of the elastomeric material. The term "(meth)acryl" is defined as acryl and/or methacryl.

The diene monomer (conjugated diene monomer) used in making the elastomeric material can include but is not limited to, for example, butadiene, isoprene and chloroprene. Butadiene can be used in some embodiments. Further, the (meth)acrylic ester monomer can include, for example, butyl acrylate, 2-ethylhexyl acrylate, and lauryl methacrylate, and can be used alone or in combination.

Further, the above-mentioned elastomeric materials of a diene monomer or (meth)acrylate ester monomer can also be a copolymer of a vinyl monomer copolymerizable therewith. The vinyl monomer copolymerizable with the diene monomer or (meth)acrylic ester monomers can include, for example, aromatic vinyl monomers and vinyl cyanate monomers. Examples of aromatic vinyl monomers that can be used include but are not limited to styrene, alpha-methylstyrene, and vinyl naphthalene, while examples of vinyl cyanate monomers that can be used include but are not limited to (meth)acrylonitrile and substituted acrylonitrile. The aromatic vinyl monomers and vinyl cyanate monomers can be used alone or in combination.

The amount of the diene monomer or (meth)acrylic ester monomer used can be in the range of from 50 weight percent to 100 weight percent or from 60 weight percent to 100 weight percent based on the entire weight of the elastomeric material. If the amount of the diene monomer or (meth)acrylic ester monomer to be used for the entire rubber elastomer is less than 50 weight percent, the ability of the polymer particles to toughen a polymer network, such as a cured epoxy matrix, is decreased. The amount of the monomer copolymerizable therewith can be 50 weight percent or less or 40 weight percent or less based on the entire weight of the elastomeric material.

Further, as an ingredient constituting the elastomeric material, a polyfunctional monomer can also be included for controlling the degree of crosslinking. The polyfunctional monomer can include, for example, divinylbenzene, butanediol di(meth)acrylate, triallyl (iso)cyanurate, allyl(meth)acrylic, diallyl itaconate, and diallyl phthalate. The polyfunctional monomer can be used in an amount in the range of from 0 weight percent to 10 weight percent, from 0 weight percent to 3 weight percent, or from 0 weight percent to 0.3 weight percent, based on the entire weight of the elastomeric material. In the case where the amount of the polyfunctional monomer exceeds 10 weight percent, the ability of the polymer particles to toughen a polymer network can be decreased.

Optionally, a chain transfer agent can be used for controlling the molecular weight or the crosslinking density of the polymer constituting the elastomeric material. The chain transfer agent can include, for example, an alkylmercaptan containing from 5 to 20 carbon atoms. The amount of the chain transfer agent in the recipe can be in the range of from 0 weight percent to 5 weight percent, or from 0 weight percent to 3 weight percent based on the entire weight of the elastomeric material. In the case where the amount exceeds 5 weight percent, the amount of the non-crosslinked portion in the rubber particle core increases, which can result in undesired effects on the heat resistance, rigidity, of the composition when it is incorporated into an epoxy resin composition.

A polysiloxane type elastomer can be used in place of the elastomeric material described above as the rubber particle core or in combination therewith. In the case where the polysiloxane type elastomer is used as the rubber particle core, a polysiloxane type elastomer constituted of dialkyl or diaryl substituted silyloxy unit, for example, dimethyl silyloxy, methylphenyl silyloxy, and diphenyl silyloxy can be used. When using such a polysiloxane type elastomer, a crosslinked structure can be introduced by using a polyfunctional alkoxy silane compound or with radial polymerization of silane compound having a vinylic reactive group.

The polymer particles can be configured to have an intermediate layer between an elastic core layer and a shell layer. The intermediate layer is formed by using a monomer (hereinafter, sometimes referred to as a "monomer for intermediate layer formation") having two or more polymerizable (radical polymerizable) double bonds in a single molecule. Through one of the double bonds, the monomer for intermediate layer formation is graft-polymerized with a polymer forming the elastic core layer to substantially chemically bond the intermediate layer and the shell layer and, at the same time, through the remaining double bond(s), can crosslink the surface of the elastic core layer or can bond to the shell layer. This can improve the grafting efficiency of the shell layer, since many double bonds are arranged in the elastic core layer. The intermediate layer is present in an amount of from 0 or from 0.2 weight percent to 7 weight percent of the polymer particles. The monomer having two or more double bonds and can be selected from the group consisting of (meth)acrylate type polyfunctional monomers, isocyanuric acid derivatives, aromatic vinyl type polyfunctional monomers, and aromatic polycarboxylic acid esters. Radical polymerizable double bonds are more efficient to form a crosslinked layer that covers surface of the elastic core layer. The mass of the monomers forming the intermediate layer equals the mass of the intermediate layer, assuming all monomers added to the formulation participated in the reaction to form the intermediate layer.

The shell layer can be graft polymerized with the polymer constituting the rubber particle core, substantially forming a chemical bond with the polymer constituting the core directly or via the intermediate layer. At least 70 weight percent, at least 80 weight percent, or at least 90 weight percent of the polymer constituting the shell layer can be bonded with the core.

The polymer constituting the shell layer can be a polymer or copolymer obtained by polymerizing or copolymerizing one or more ingredients selected from the group consisting of (meth)acrylic esters, aromatic vinyl compounds, vinyl cyanate compounds, unsaturated acid derivatives, (meth)acrylamide derivatives and maleimide derivatives.

Examples of the (meth)acrylic esters that can be used include, but are not limited to alkyl(meth)acrylate esters such as methyl(meth)acrylate, ethyl(meth)acrylate, butyl(meth)acrylate, and 2-ethylhexyl(meth)acrylate. Examples of the aromatic vinyl compounds include, but are not limited to styrene, a-methylstyrene, alkyl-substituted styrene, and halogen-substituted styrenes such as bromo styrene or chloro styrene.

Examples of vinyl cyanate compounds include, but are not limited to (meth)acrylonitrile and substituted acrylonitrile. Examples of the monomers containing the reactive functional group include, but are not limited to 2-hydroxylethyl (meth)acrylate, 2- aminoethyl(meth)acrylate, glycidyl(meth)acrylate, and (meth)acrylate esters having a reactive side chain. Examples of the vinyl ether containing a reactive group include but are not limited to glycidyl vinyl ether and allyl vinyl ether. Examples of the unsaturated carboxylic acid derivatives include but are not limited to (meth)acrylic acid, itaconic acid, chrotonic acid and maleic acid anhydride. Examples of (meth)acrylamide derivatives include, but are not limited to (meth)acrylamide (including N-substituted products).

Examples maleimide derivatives include but are not limited to maleic acid imide (including N-substitution products).

The shell polymer can comprise at least 5, at least 10, at least 15 or at least 20% up to 70, up to 60, or up to 50% by weight based on total weight of the particle.

The weight ratio of the core layer to the shell layer of a preferred rubber particle can be in the range of from at least 30:70, at least 40:60, or at least 50:50 up to 95:5, up to 90:10, up to 85:15, or up to 80:20.

The shell can have a T_{g} of at least 50, at least 70, or at least 100 °C.

The core/shell polymer particles can be produced by a variety of well-known methods, for example, emulsion polymerization, suspension polymerization, or micro-suspension polymerization. Among them, a production process by the emulsion polymerization is suitable from the view point that it is easy to design composition of the core/shell polymer particles, and it is easy to produce the particles at an industrial scale and maintain quality of the rubbery polymer particles suitable to the process of this invention. As the emulsifying or dispersing agent in an aqueous medium, it is preferred to use those that maintain emulsifying or dispersion stability even in the case where pH of the aqueous latex is neutral. Specifically, they include, for example, nonionic emulsifier or dispersant such as alkali metal salts or ammonium salts of various acids, for example, alkyl or aryl sulfonic acids typically represented by dioctyl sulfosuccinic acid or dodecylbenzene sulfonic acid, alkyl or aryl sulfonic acid typically represented by dodecyl sulfonic acid, alkyl or aryl ether sulfonic acid, alkyl or aryl substituted phosphoric acid, alkyl or aryl ether substituted phosphoric acid, or N-alkyl or aryl sarcosinic acid typically represented by dodecyl sarcosinic acid, alkyl or aryl carboxylic acid typically represented by oleic acid or stearic acid, alkyl or aryl ether carboxylic acids, and alkyl or aryl substituted polyethylene glycol, and dispersant such as polyvinyl alcohol, alkyl substituted cellulose, polyvinyl pyrrolidone or polyacrylic acid derivative. They may be used alone or in combination of two or more.

The particle can have an alkylacrylate copolymer core surrounded by a methyl methacrylate copolymer shell. The particle can have a core with a T_{g} of less than 0 °C and the shell has a T_{g} of at least 100 °C. Commercially available particles that are suitable include PARALOID^{™} EXL 5136 from The Dow Chemical Company.

The outer layer can comprise more than one (e.g., 2 or 3) types of polymeric particle as described above.

In some embodiments, the outer layer may further comprise a first polyethylene having a density of 0.925 g/cm³ to 0.970 g/cm³ and a melt index (I₂) of 0.8 to 10 g/10 minutes. The first polyethylene is different from the first low density polyethylene having a density of 0.919 g/cm³ to 0.940 g/cm³ and a melt index (I₂) of 0.3 to 5 g/10 minutes discussed above.

The first polyethylene that may be used in the outer layer has a density of 0.925 to 0.970 g/cm³. All individual values and subranges of 0.925 to 0.970 g/cm³ are included herein and disclosed herein; for example, the density of the first polyethylene can be from a lower limit of 0.925, 0.930, 0.935, 0.940, 0.945, 0.950, 0.955, or 0.960 g/ cm³ to an upper limit of 0.945, 0.950, 0.955, 0.960, 0.965, or 0.970 g/cm³. In some embodiments, the first polyethylene has a density of 0.960 to 0.970 g/cm³.

In some embodiments, the first polyethylene has a melt index (I₂) 0.8 to 10 g/10 minutes. All individual values and subranges from 0.8 to 10 g/10 minutes are included herein and disclosed herein. For example, the first polyethylene can have an I₂ from a lower limit of 0.8, 1.0, 1.2, 1.5, 1.8, 2, 2.5, 3, 3.5, 4, 4.5, 5, 5.5, 6, or 6.5 g/10 minutes to an upper limit of 4, 4.5, 5, 5.5, 6, 6.5, 7, 7.5, 8, 8.5, 9, 9.5, or 10 g/10 minutes. For example, the first polyethylene can have an I₂ of 6 to 10 g/10 minutes.

The first polyethylene can be an optional component in the outer in some embodiments. In embodiments where the outer layer includes the first polyethylene, the outer layer comprises up to 50 wt% of the first polyethylene polyethylene, based on the total weight of the outer layer. All individual values and subranges up to 50 percent by weight (wt%) are included herein and disclosed herein; for example the amount of the first polyethylene can be from a lower limit of 1, 3, 5, 10, 15, 20, 25, 30, 35 or 40 wt% to an upper limit of 5, 10, 15, 20, 25, 30, 35, 40, 45, or 50. For example, the amount of the first polyethylene can be up to 20 wt%, or in the alternative, from 1 to 20 wt%, or in the alternative, from 5 to 20 wt%.

Examples of polyethylenes that can be used as the first polyethylene in the outer layer include, for example, low density polyethylene, linear low density polyethylene, medium density polyethylene, enhanced polyethylene, and high density polyethylene. In some embodiments, the first polyethylene is a high density polyethylene. Examples of commercially available polyethylenes that can be used as the first polyethylene include DOWLEX^{™} 2006G high density polyethylene, ELITE^{™} 5960G1 enhanced polyethylene, DOWLEX^{™} 2750ST high density polyethylene, ELITE^{™} 5940ST enhanced polyethylene, DOWLEX^{™} 2740G polyethylene, DOWLEX^{™} 2062GC polyethylene, and ELITE^{™} AT 6900 enhanced polyethylene, each of which are available from The Dow Chemical Company.

In some embodiments, the outer layer of the inventive multilayer film further comprises a compatibilizer. The compatibilizer can advantageously provide a smooth dispersion of the polymer particles within the base resin (e.g., the first low density polyethylene and any additional polyethylene). The compatibilizer is a polymer characterized in that it has similar chemical structure to the base polymer and has pendant and/or end groups that have an affinity to the core/shell polymer particle. Thus, where the base polymer is a polyolefin, the compatibilizer can be the same class of polyolefin (e.g. if the base polymer is a polyethylene the compatibilizer advantageously can be a polyethylene functionalized with a group having affinity to the shell material). In various embodiments, the compatibilizer can be a polyolefin/acrylate copolymer (e.g., polyethylene/acrylate copolymer such as ELVALOY AC^{™} from The Dow Chemical Company) or a polyolefin/acrylic acid copolymer (e.g., polyethylene/acrylic acid copolymer such as NUCREL^{™} from The Dow Chemical Company), or a polyolefin/carboxylic acid copolymer, or a polyolefin/maleic anhydride ester copolymer. In some embodiments, a polyolefin based compatibilizer can be grafted with one or more anhydride groups or acrylate groups or acrylic acid groups. For example, if the base polymer comprises LDPE as its sole or major component, the compatibilizer can be a polyethylene such as an LDPE or HDPE grafted with an anhydride group such as maleic anhydride. One example is FUSABOND^{™} E265 from The Dow Chemical Company. The amount of compatibilizer can be from 0.5 or from 1 weight percent up to 30, up to 20, up to 15, or up to 10 weight percent based on total weight of the outer layer. In some embodiments, the amount of compatibilizer is 0.5 to 10 weight percent based on the total weight of the outer layer. The amount of the compatibilizer may increase as the amount of acrylic polymer particle increases. The compatibilizer can be a mixture of polymers as described above as compatibilizers.

The outer layer of the multilayer film may contain one or more additives as is generally known in the art. Such additives include antioxidants, such as IRGANOX 1010 and IRGAFOS 168 (commercially available from BASF), ultraviolet light absorbers, antistatic agents, pigments, dyes, nucleating agents, fillers, slip agents, fire retardants, plasticizers, processing aids, lubricants, stabilizers, smoke inhibitors, viscosity control agents, surface modification agents, and anti-blocking agents.

### Second Layer

Multilayer films according to embodiments of the present invention further comprise a second layer in adhering contact with the outer surface. In some embodiments, the second layer comprises (i) 1 to 80 weight percent of a second low density polyethylene having a density of 0.919 g/cm³ to 0.940 g/cm³ and a melt index (I₂) of 0.3 to 5 g/10 minutes, and (ii) 20 to 99 weight percent of a second polyethylene having a density of 0.925 g/cm³ to 0.970 g/cm³ and a melt index (I₂) of 0.8 to 10 g/10 minutes, each based on the total weight of the outer layer. In some embodiments, the second low density polyethylene used in the second layer is the same as the first low density polyethylene used in the outer layer (i.e., the same density, melt index (I₂), and polymeric architechture). In some embodiments, the second polyethylene used in the second layer is the same as the first polyethylene used in the outer layer (i.e., the same density, melt index (I₂), and polymeric architechture). In some embodiments, the second low density polyethylene used in the second layer is the same as the first low density polyethylene used in the outer layer, and the second polyethylene used in the second layer is the same as the first polyethylene used in the outer layer.

Regarding the second low density polyethylene used in the second layer, the low density polyethylene having a density of 0.919 to 0.940 g/cm³. All individual values and subranges of 0.919 to 0.940 g/cm³ are included herein and disclosed herein; for example, the density of the second low density polyethylene can be from a lower limit of 0.919, 0.920, 0.922, 0.925, 0.927, 0.929, or 0.930 g/ cm³ to an upper limit of 0.925, 0.930, 0.935, or 0.940 g/cm³. In some embodiments, the second low density polyethylene has a density of 0.930 to 0.940 g/cm³.

In some embodiments, the second low density polyethylene has a melt index (I₂) 0.3 to 5 g/10 minutes. All individual values and subranges from 0.3 to 5 g/10 minutes are included herein and disclosed herein. For example, the second low density polyethylene can have an I₂ from a lower limit of 0.3, 0.5, 0.7, 0.9, 1.0, 1.2, 1.5, 1.8, 2.0, 2.3, 2.5, 2.7, 3.0, 3.3, or 3.5 g/10 minutes to an upper limit of 2.0, 2.5, 2.8, 3.0, 3.2, 3.5, 3.7, 4.0, 4.2, 4.5, 4.8, or 5 g/10 minutes. For example, the second low density polyethylene can have an I₂ of 2.5 to 4.0 g/10 minutes.

The second layer comprises from 1 to 100 wt% of the second low density polyethylene, based on the total weight of the second layer. All individual values and subranges from 1 to 80 percent by weight (wt%) are included herein and disclosed herein; for example the amount of the second low density polyethylene can be from a lower limit of 1, 3, 5, 10, 15, 20, 25, 30, 35, 40, 45, 50, 55, or 60 wt% to an upper limit of 30, 35, 40, 45, 50, 55, 60, 65, 70, 75, or 80 wt%. For example, the amount of the second low density polyethylene can be from 50 to 100 wt%, or in the alternative, from 60 to 100 wt%, or in the alternative, from 70 to 100 wt%.

Examples of low density polyethylenes that can be used in the second layer in some embodiments include DOW^{™} low density polyethylenes (LDPE) commercially available from The Dow Chemical Company, such as DOW^{™} LDPE 525E, DOW^{™} LDPE 410E, DOW^{™} LDPE 421E, DOW^{™} LDPE 545E, DOW^{™} LDPE 555E, and DOW^{™} LDPE 515E.

In addition to the LDPE, the second layer also comprises a second polyethylene having a density of 0.925 g/cm³ to 0.970 g/cm³ and a melt index (I₂) of 0.8 to 10 g/10 minutes. The second polyethylene is different from the second low density polyethylene having a density of 0.919 g/cm³ to 0.940 g/cm³ and a melt index (I₂) of 0.3 to 5 g/10 minutes discussed above. As noted above, the second polyethylene in the second layer can be the same as the first polyethylene used in the outer layer. In some embodiments, both the first polyethylene used in the outer layer and the second polyethylene used in the second layer can be high density polyethylenes.

The second polyethylene that may be used in the outer layer has a density of 0.925 to 0.970 g/cm³. All individual values and subranges of 0.925 to 0.970 g/cm³ are included herein and disclosed herein; for example, the density of the second polyethylene can be from a lower limit of 0.925, 0.930, 0.935, 0.940, 0.945, 0.950, 0.955, or 0.960 g/ cm³ to an upper limit of 0.945, 0.950, 0.955, 0.960, 0.965, or 0.970 g/cm³. In some embodiments, the second polyethylene has a density of 0.960 to 0.970 g/cm³.

In some embodiments, the second polyethylene has a melt index (I₂) 0.8 to 10 g/10 minutes. All individual values and subranges from 0.8 to 10 g/10 minutes are included herein and disclosed herein. For example, the second polyethylene can have an I₂ from a lower limit of 0.8, 1.0, 1.2, 1.5, 1.8, 2, 2.5, 3, 3.5, 4, 4.5, 5, 5.5, 6, or 6.5 g/10 minutes to an upper limit of 4, 4.5, 5, 5.5, 6, 6.5, 7, 7.5, 8, 8.5, 9, 9.5, or 10 g/10 minutes. For example, the second polyethylene can have an I₂ of 6 to 10 g/10 minutes.

The second layer comprises from 20 to 99 wt% of the second polyethylene, based on the total weight of the second layer. All individual values and subranges from 20 to 99 percent by weight (wt%) are included herein and disclosed herein; for example the amount of the second polyethylene can be from a lower limit of 20, 25, 30, 35, 40, 45, 50, 55, 60, 65, 70, 76, or 80 wt% to an upper limit of 30, 35, 40, 45, 50, 55, 60, 65, 70, 75, 80, 85, 90, 95, or 99 wt%. For example, the amount of the second polyethylene can be from 1 to 50 wt%, or in the alternative, from 1 to 40 wt%, or in the alternative, from 1 to 30 wt%.

Examples of polyethylenes that can be used as the second polyethylene in the second layer include, for example, low density polyethylene, linear low density polyethylene, medium density polyethylene, enhanced polyethylene, and high density polyethylene. In some embodiments, the second polyethylene is a high density polyethylene. Examples of commercially available polyethylenes that can be used as the second polyethylene include DOWLEX^{™} 2006G high density polyethylene, ELITE^{™} 5960G1 enhanced polyethylene, DOWLEX^{™} 2750ST high density polyethylene, ELITE^{™} 5940ST enhanced polyethylene, DOWLEX^{™} 2740G polyethylene, DOWLEX^{™} 2062GC polyethylene, and ELITE^{™} AT 6900 enhanced polyethylene, each of which are available from The Dow Chemical Company.

The second layer of the multilayer film may contain one or more additives as is generally known in the art. Such additives include antioxidants, such as IRGANOX 1010 and IRGAFOS 168 (commercially available from BASF), ultraviolet light absorbers, antistatic agents, pigments, dyes, nucleating agents, fillers, slip agents, fire retardants, plasticizers, processing aids, lubricants, stabilizers, smoke inhibitors, viscosity control agents, surface modification agents, and anti-blocking agents.

### Other Layers

Multilayer films of the present invention can comprise a variety of other layers in addition to the outer layer and the second layer. Such layers would be in adhering contact with the second layer or another intervening layer. The number of layers in the multilayer film can depend on a number of factors including, for example, the desired properties of the film, the end use application, the desired thickness of the film, and others. For example, the other layers when the multilayer film is to be used in package may be different from the other layers used when the multilayer film is to be used as a label. Examples of different layers that can be used in various embodiments are discussed further herein. Multilayer films of the present invention comprise up to 13 layers in some embodiments. In various embodiments, the multilayer film comprises 3, 4, 5, 6, 7, 8, 9, 10, 11, 12, or 13 layers.

In some embodiments, a multilayer film of the present invention comprises a second outer layer which is a sealant layer. The sealant layer can be used to form an article or package by using the sealant layer to adhere the film to another film, to a laminate, or to itself. In some embodiments, the sealant layer can comprise any resins known to those having ordinary skill in the art to be useful as a sealant layer. Examples of polymers that can be used to form a sealant layer in some embodiments of the present invention include, without limitation, LDPE (e.g., DOW^{™} LDPE and AGILITY^{™} LDPE commercially available from The Dow Chemical Company), LLDPE (e.g., DOWLEX^{™} LLDPE resins commercially available from The Dow Chemical Company), polyolefin plastomers or elastomers (e.g., AFFINITY^{™} plastomers and elastomers commercially available from The Dow Chemical Company), ethylene vinyl acetate copolymers (e.g., ELVAX^{™} ethylene vinyl acetate copolymers commercially available from The Dow Chemical Company) and ionomers of ethylene acid copolymers (e.g., SURLYN^{™} ionomers commercially available from The Dow Chemical Company).

In some embodiments, the multilayer film comprises a second outer layer that provides a second matte surface. In some embodiments, the second outer layer has a gloss of less than 50% as measured by ASTM D2457 at an angle of 45°. In some such embodiments, the composition of the second outer layer is the same as the composition of the first outer layer. In some such embodiments, the second outer layer comprises (i) 30 to 99.5 weight percent of a low density polyethylene having a density of 0.919 g/cm³ to 0.940 g/cm³ and a melt index (I₂) of 0.3 to 5 g/10 minutes, (ii) 0.1 to 20 weight percent of polymer particles having a core and a shell structure wherein the core comprises a first polymeric material having a first refractive index and the shell comprises a second polymeric material having a second refractive index that is different from the first refractive index, and (iii) optionally, up to 50 weight percent of a polyethylene having a density of 0.925 g/cm³ to 0.970 g/cm³ and a melt index (I₂) of 0.8 to 10 g/10 minutes, each based on the total weight of the second outer layer.

In some embodiments, the multilayer film is a five layer structure wherein a first outer layer has a gloss of less than 50% as measured by ASTM D2457 at an angle of 45° to provide the matte surface. A core or innermost layer has the composition of the second layer as described above. A second outer layer, in some embodiments, can provide a second matte surface (a gloss of less than 50% as measured by ASTM D2457 at an angle of 45°) or can be a sealant layer as described above. Two intermediate or sub-skin layers are present with one intermediate layer between the first outer layer and the core layer, and a second intermediate layer between the second outer layer and the core layer. In some embodiments, the intermediate layers can be formed from high density polyethylene or a blend of high density polyethylene and linear low density polyethylene (with HDPE being present in the larger amount).

In some embodiments, depending on the desired use or requirements of the multilayer film, the film can comprise other layers such as barrier layers. For example, for some uses, it may be desirable for the film to provide a barrier to moisture, light, aroma/odor, and/or oxygen transmission. Such barrier layers can comprise, for example, polyamide, ethylene vinyl alcohol copolymer, and other polymers used in barrier layers as known to those of skill in the art. In such embodiments, an inner layer of the multilayer film comprises ethylene vinyl alcohol copolymer or polyamide. In some such embodiments, the multilayer film comprises 30 weight percent or less ethylene vinyl alcohol copolymer and polyamide based on the total weight of the multilayer film. In some embodiments, the multilayer film comprises 20 weight percent or less ethylene vinyl alcohol copolymer and polyamide based on the total weight of the multilayer film. In some embodiments, the multilayer film comprises 10 weight percent or less ethylene vinyl alcohol copolymer and polyamide based on the total weight of the multilayer film. In some embodiments, the multilayer film comprises less than 5% by weight ethylene vinyl alcohol copolymer and polyamide based on the total weight of the multilayer film.

In embodiments comprising an inner layer having ethylene vinyl alcohol copolymer or polyamide, one or more tie layers may be included in the film to adhere the barrier layer(s) to the polyethylene-based layer(s) as known to those of skill in the art based on the teachings herein. In general, a wide variety of tie layer compositions can be used to form a tie layer as known to those of skill in the art based on the teachings herein.

In some embodiments, barrier properties may not be as important for the multilayer film. In some such embodiments, the multilayer film may comprise less than 0.5 weight percent ethylene vinyl alcohol copolymer and polyamide based on the total weight of the film. In some embodiments, the multilayer film comprises less than 0.1 weight percent ethylene vinyl alcohol copolymer and polyamide based on the total weight of the film. In some embodiments, the multilayer film is free of ethylene vinyl alcohol copolymer and polyamide.

In some embodiments, a multilayer film of the present invention has a total thickness of at least 30 microns. In some embodiments, the multilayer film has a thickness of up to 90 microns. In some embodiments, the multilayer film has a thickness from 30 microns to 90 microns.

Multilayer films of the present invention can exhibit one or more desirable properties. As discussed elsewhere, the multilayer films of the present invention has a matte surface. The outer layer of the multilayer film provides a matte surface in that the outer layer has one or both of (1) a gloss of less than 50%, and (2) a haze of greater than 45%. In some embodiments, the outer layer has a gloss of less than 50% as measured by ASTM D2457 at an angle of 45°. In some embodiments, the outer layer has a gloss of less than 45% as measured by ASTM D2457 at an angle of 45°. In some embodiments, the outer layer has a haze of greater than 45% as measured by ASTM D1003. In some embodiments, the outer layer has a haze of greater than 50% as measured by ASTM D1003. In some embodiments, the outer layer has a haze of greater than 55% as measured by ASTM D1003. In some embodiments, the outer layer has a gloss of less than 50% as measured by ASTM D2457 at an angle of 45° and haze of greater than 45% as measured by ASTM D1003. In some embodiments, the outer layer has a gloss of less than 45% as measured by ASTM D2457 at an angle of 45° and haze of greater than 50% as measured by ASTM D1003. In some embodiments, the outer layer has a gloss of less than 45% as measured by ASTM D2457 at an angle of 45° and haze of greater than 55% as measured by ASTM D1003.

Multilayer films can be coextruded as blown films or cast films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

### Labels

Embodiments of the present invention also comprise labels formed from or incorporating multilayer films of the present invention. Such labels can be made from the inventive multilayer films using techniques known to those having ordinary skill in the art based on the teachings herein.

### Packages

Embodiments of the present invention also comprise packages formed from or incorporating multilayer films of the present invention. Such packages can be made from the inventive multilayer films using techniques known to those having ordinary skill in the art based on the teachings herein.

Examples of such packages can include flexible packages, pouches, stand-up pouches, and pre-made packages or pouches. In some embodiments, multilayer films of the present invention can be used for food packages. Examples of food that can be included in such packages include meats, cheeses, cereal, nuts, juices, sauces, and others. Such packages can be formed using techniques known to those of skill in the art based on the teachings herein and based on the particular use for the package (e.g., type of food, amount of food).

### TEST METHODS

Unless otherwise indicated herein, the following analytical methods are used in describing aspects of the present invention:

### Melt index

Melt indices I₂ (or I2) and I₁₀ (or I10) were measured in accordance to ASTM D-1238 (method B) at 190°C and at 2.16 kg and 10 kg load, respectively. Their values are reported in g/10 min.

### Density

Samples for density measurement were prepared according to ASTM D4703. Measurements were made, according to ASTM D792, Method B, within one hour of sample pressing.

### Haze

Haze was measured according to ASTM D 1003. A Hazegard Plus (BYK-Gardner USA; Columbia, MD) was used for testing. For each test, 5 samples were examined, and an average was reported. An area having a diameter of six centimeters was measured on each film sample.

### Gloss

Gloss at an angle of 45° was measured according to ASTM D2457 on a BYK-Gardner (Columbia, MD) micro-gloss 45 degree gloss meter (Columbia, MD).

### MD and CD Elmendorf Tear Strength

Elmendorf tear strength in the machine and cross directions are measured in accordance with ASTM D1922. The force in grams required to propagate tearing across a film or sheeting specimen is measured using a precisely calibrated pendulum device. Acting by gravity, the pendulum swings through an arc, tearing the specimen from a precut slit. The specimen is held on one side by the pendulum and on the other side by a stationary member. The loss in energy by the pendulum is indicated by a pointer or by an electronic scale. The scale indication is a function of the force required to tear the specimen. The sample used is the 'constant radius geometry' as specified in D1922. Testing would be typically carried out on samples that have been cut from both the MD and CD directions. Prior to testing, the sample thickness is measured at the sample center. A total of 10 specimens per direction are tested, and the average tear strength is reported. Samples that tear at an angle greater than 60° from the vertical are described as 'oblique' tears - such tears should be noted, though the strength values are included in the average strength calculation. Some embodiments of the invention will now be described in detail in the following Examples.

### Examples

The following materials are used to make a variety of inventive and comparative films as discussed further below:
- DOW^{™} LDPE 525E (hereinafter "LDPE"): low density polyethylene having a density of 0.9315 g/cm³ and a melt index (I₂) of 3.2 g/10 minutes.
- DOWLEX^{™} 2006 (hereinafter "HDPE"): high density polyethylene having a density of 0.963 g/cm³ and a melt index (I₂) of 8 g/10 minutes.
- PARALOID^{™} EXL-5136 (hereinafter "Polymer Particles"): polymer particles having a core and a shell structure. The polymeric material used in the core is elastomeric and has a glass transition temperature (T_{g}) of < 0 °C. The polymeric material used in the shell is thermoplastic and has a glass transition temperature (T_{g}) of > 100 °C. The polymeric material in the core has a refractive index that is different from the refractive index of the polymeric material in the shell. The average particle size of the Polymer Particles is between 1 and 10 microns.
- FUSABOND^{™} E265 (hereinafter "Compatibilizer"): High density polyethylene grafted with maleic anhydride having a density of 0.950 g/cm³ and a melt index (I₂) of 12 g/10 minutes.
Each of these materials are commercially available from The Dow Chemical Company.

The following films, having structures of Layer A/Layer B/Layer C, are made:

**Table 1**

| | **Layer A, 20 microns (25%)** | **Layer B, 40 microns (50%)** | **Layer C, 20 microns (25%)** | **Overall Composition** |
|---|---|---|---|---|
| **Comparative Film A** | 100% LDPE | 100% LDPE | 100% LDPE | 100% LDPE |
| **Comparative Film B** | 80% LDPE | 100% LDPE | 80% LDPE | 90% LDPE |
| | 20% HDPE | | 20% HDPE | 10% HDPE |
| **Inventive Film 1** | 20% HDPE | 100% LDPE | 20% HDPE | 10% HDPE |
| | 79% LDPE* | | 79% LDPE* | 89.5% LDPE |
| | 1% Polymer Particles* | | 1% Polymer Particles* | 0.5% Polymer Particles |
| **Inventive Film 2** | 20% HDPE | 100% LDPE | 20% HDPE | 10% HDPE |
| | 75% LDPE* | | 75% LDPE* | 87.5% LDPE |
| | 5% Polymer Particles* | | 5% Polymer Particles* | 2.5% Polymer Particles |
| **Inventive Film 3** | 20% HDPE | 100% LDPE | 20% HDPE | 10% HDPE |
| | 70% LDPE* | | 70% LDPE* | 85% LDPE |
| | 5% Polymer Particles* | | 5% Polymer Particles* | 2.5% Polymer Particles |
| | 5% Compatibilizer* | | 5% Compatibilizer* | 2.5% Compatibilizer |
| **Inventive Film 4** | 20% HDPE | 100% LDPE | 20% HDPE | 10% HDPE |
| | 65% LDPE* | | 65% LDPE* | 82.5% LDPE |
| | 5% Polymer Particles* | | 5% Polymer Particles* | 2.5% Polymer Particles |
| | 10% Compatibilizer* | | 10% Compatibilizer* | 5% Compatibilizer |
| **Inventive Film 5** | 20% HDPE | 95% LDPE* | 20% HDPE | 10% HDPE |
| | 65% LDPE* | 2.5% Polymer Particles* | 65% LDPE* | 80% LDPE |
| | 5% Polymer Particles* | | 5% Polymer Particles* | 3.75% Polymer Particles |
| | | 2.5% Compatibilizer* | | |
| | 10% Compatibilizer* | | 10% Compatibilizer* | 6.25% Compatibilizer |
| **Comparative Film C** | 100% LDPE | 90% LDPE* | 100% LDPE | 95% LDPE |
| | | 5% Polymer Particles* | | 2.5% Polymer Particles |
| | | 5% Compatibilizer* | | 2.5% Compatibilizer |

| | | | | |
|---|---|---|---|---|
| * These components are melt blended prior to being provided to the blown film line. | | | | |

In the above Inventive Films that include Polymer Particles, the Polymer Particles are melt blended with the LDPE and Compatibilizer (if present) prior to being provided to the blown film line. The blends are melt blended on a Buss Kneader Compounder at 120 rpm (kneader speed), 3 amps (motor current), 5 kg/h, 60 rpm (screw speed), and a temperature profile of 110 °C/130 °C/140 °C/120 °C/125 °C.

The above Comparative and Inventive Films are coextruded on a Dr. Collin 3-layer Coextrusion Blown Film line. The nominal film thickness is 80 microns. The line was comprised of three 25:1 L/D single screw extruders, equipped with grooved feed zones. Screw diameters are 25 mm for the two outer layer extruders and 30 mm for the inner layer extruder (formed from Layer B). The melt temperature is 180° C-210° C. The die diameter is 30 mm, and the die gap is 1.8 mm. The blow-up ratio is 2.5:1. The output rate is 15 kg/hour.

The gloss at 45° and the haze of the Comparative and Inventive Films are measured as described in the Test Methods section. The results are shown in Table 2:

**Table 2**

| | **Gloss @ 45° (%)** | **Haze (%)** |
|---|---|---|
| **Comparative Film A [Ref 1]** | 101 | 14.8 |
| **Comparative Film B [Ref 2]** | 85 | 20.7 |
| **Inventive Film 1 [DLP 1]** | 70.6 | 30.3 |
| **Inventive Film 2 [DLP 2]** | 41.7 | 53 |
| **Inventive Film 3 [DLPF 1]** | 39.8 | 56.5 |
| **Inventive Film 4 [DLPF 2]** | 38.7 | 58.4 |
| **Inventive Film 5 [DLP 3]** | 45.8 | 63 |
| **Comparative Film C [LPF1]** | 88.1 | 43 |

The effect of the addition of the Polymer Particles to a film can be observed in Table 2. Adding up to 2.5 weight percent of Polymer Particles (Inventive Film 2) in one or more outer layers led to a reduction of gloss of 59% and an increase in haze of 358%. Increasing the concentration of Polymer Particles in one or more outer layers up to 3.75 weight percent combined with compatibilizer up to 6.25 weight percent (Inventive Films 3-5) resulted in further improvement, with a 62% reduction in gloss and an increase in haze of up to 425%. The reduction in gloss is of particular interest for matte film applications, such as labels, because a less shiny surface is perceived as more natural.

The Elmendorf tear strength of the films in the machine direction (MD) and cross direction (CD) are also measured as described in the Test Methods section above. The results are shown in Table 3:

**Table 3**

| | **Elmendorf Tear, MD (g** | **Elmendorf Tear, CD (g)** |
|---|---|---|
| **Comparative Film A [Ref 1]** | 215 | 149 |
| **Comparative Film B [Ref 2]** | 122 | 194 |
| **Inventive Film 1 [DLP 1]** | 135 | 192 |
| **Inventive Film 2 [DLP 2]** | 108 | 182 |
| **Inventive Film 3 [DLPF 1]** | 106 | 180 |
| **Inventive Film 4 [DLPF 2]** | 128 | 227 |
| **Inventive Film 5 [DLP 3]** | 136 | 155 |
| **Comparative Film C [LPF1]** | 173 | 212 |

As shown in Table 3, the inclusion of Polymer Particles did not result in a significant impact on Elmendorf tear strength in the cross direction. While there was a negative impact on Elmendorf tear strength in the machine direction, this is only in relation to the monomaterial film (Comparative Film A).

## Claims

1. A multilayer film having at least one matte surface comprising:
(a) an outer layer comprising (i) 30 to 99.5 weight percent of a first low density polyethylene having a density of 0.919 g/cm³ to 0.940 g/cm³ measured according to ASTM D792, Method B, and a melt index (I₂) of 0.3 to 5 g/10 minutes measured according to ASTM D-1238 (method B) at 190°C and at 2.16 kg load, (ii) 0.1 to 20 weight percent of polymer particles having a core and a shell structure wherein the core comprises a first polymeric material being elastomeric and having a first refractive index measured according to ASTM D542 and the shell comprises a second polymeric material being thermoplastic having a second refractive index measured according to ASTM D542 that is different from the first refractive index, wherein the refractive index of the polymer in the core differs from the refractive index of the polymer in the shell by at least 0.02 or at least 0.03, and (iii) optionally, up to 50 weight percent of a first polyethylene having a density of 0.925 g/cm³ to 0.970 g/cm³ measured according to ASTM D792, Method B, and a melt index (I₂) of 0.8 to 10 g/10 minutes measured according to ASTM D-1238 (method B) at 190°C and at 2.16 kg load, each based on the total weight of the outer layer; and
(b) a second layer in adhering contact with the outer layer comprising (i) 1 to 80 weight percent of a second low density polyethylene having a density of 0.919 g/cm³ to 0.940 g/cm³ measured according to ASTM D792, Method B, and a melt index (I₂) of 0.3 to 5 g/10 minutes measured according to ASTM D-1238 (method B) at 190°C and at 2.16 kg load, and (ii) 20 to 99 weight percent of a second polyethylene having a density of 0.925 g/cm³ to 0.970 g/cm³ measured according to ASTM D792, Method B, and a melt index (I₂) of 0.8 to 10 g/10 minutes measured according to ASTM D-1238 (method B) at 190°C and at 2.16 kg load, each based on the total weight of the second layer; wherein the outer layer has a gloss of less than 50% as measured by ASTM D2457 at an angle of 45°.

2. The multilayer film of claim 1, wherein the shell comprises an acrylic polymer.

3. The multilayer film of any of the preceding claims, wherein the polymer particles have an average size of 1 to 10 microns.

4. The multilayer film of any of the preceding claims, wherein the outer layer further comprises a compatibilizer.

5. The multilayer film of claim 4, wherein the compatibilizer is a polyolefin copolymer with acrylic acid, a polyolefin copolymer with an acrylate, a polyolefin copolymer with a maleic anhydride ester, or a polyolefin copolymer grafted with one or more anhydride group, acrylate group or carboxylic acid group.

6. The multilayer film of claim 4, wherein the compatibilizer is maleic anhydride grafted low density polyethylene or a maleic anhydride grafted high density polyethylene.

7. The multilayer film of any of claims 4 to 6, wherein the compatibilizer is present in the outer layer in an amount up to 10 weight percent based on the total weight of the outer layer.

8. The multilayer film of any of the preceding claims, wherein the first polyethylene and the second polyethylene are each high density polyethylene.

9. A label comprising the multilayer film of any of the preceding claims.

10. A package comprising the multilayer film of any of claims 1 to 8.

## Patentansprüche

1. Mehrschichtfolie, die mindestens eine matte Oberfläche aufweist, umfassend:
(a) eine Außenschicht, umfassend (i) zu 30 bis 99,5 Gewichtsprozent ein erstes Polyethylen niedriger Dichte, das eine Dichte von 0,919 g/cm³ bis 0,940 g/cm³, gemessen nach ASTM D792, Verfahren B, und einen Schmelzindex (I₂) von 0,3 bis 5 g/10 Minuten aufweist, gemessen nach ASTM D-1238 (Verfahren B) bei 190 °C und bei 2,16 kg Belastung, (ii) zu 0,1 bis 20 Gewichtsprozent Polymerpartikel, die einen Kern und eine Schalenstruktur aufweisen, wobei der Kern ein erstes Polymermaterial umfasst, das elastomer ist und einen ersten Brechungsindex aufweist, gemessen nach ASTM D542, und die Schale ein zweites Polymermaterial umfasst, das thermoplastisch ist und einen zweiten Brechungsindex aufweist, gemessen nach ASTM D542, der sich von dem ersten Brechungsindex unterscheidet, wobei sich der Brechungsindex des Polymers in dem Kern von dem Brechungsindex des Polymers in der Schale um mindestens 0,02 oder mindestens 0,03 unterscheidet, und (iii) optional bis zu 50 Gewichtsprozent ein erstes Polyethylen, das eine Dichte von 0,925 g/cm³ bis 0,970 g/cm³, gemessen nach ASTM D792, Verfahren B, und einen Schmelzindex (I₂) von 0,8 bis 10 g/10 Minuten aufweist, gemessen nach ASTM D-1238 (Verfahren B) bei 190 °C und bei 2,16 kg Belastung, jeweils bezogen auf das Gesamtgewicht der Außenschicht; und
(b) eine zweite Schicht in haftendem Kontakt mit der Außenschicht, umfassend (i) zu 1 bis 80 Gewichtsprozent ein zweites Polyethylen niedriger Dichte, das eine Dichte von 0,919 g/cm³ bis 0,940 g/cm³, gemessen nach ASTM D792, Verfahren B, und einen Schmelzindex (I₂) von 0,3 bis 5 g/10 Minuten aufweist, gemessen nach ASTM D-1238 (Verfahren B) bei 190 °C und bei 2,16 kg Belastung, und (ii) zu 20 bis 99 Gewichtsprozent ein zweites Polyethylen, das eine Dichte von 0,925 g/cm³ bis 0,970 g/cm³, gemessen nach ASTM D792, Verfahren B, und einen Schmelzindex (I₂) von 0,8 bis 10 g/10 Minuten aufweist, gemessen nach ASTM D-1238 (Verfahren B) bei 190 °C und bei 2,16 kg Belastung, jeweils bezogen auf das Gesamtgewicht der zweiten Schicht; wobei die Außenschicht einen Glanz von weniger als 50 % aufweist, gemessen nach ASTM D2457 in einem Winkel von 45°.

2. Mehrschichtfolie nach Anspruch 1, wobei die Schale ein Acrylpolymer umfasst.

3. Mehrschichtfolie nach einem der vorstehenden Ansprüche, wobei die Polymerpartikel eine durchschnittliche Größe von 1 bis 10 Mikrometer aufweisen.

4. Mehrschichtfolie nach einem der vorstehenden Ansprüche, wobei die Außenschicht ferner einen Kompatibilitätsvermittler umfasst.

5. Mehrschichtfolie nach Anspruch 4, wobei der Kompatibilitätsvermittler ein Polyolefincopolymer mit Acrylsäure, ein Polyolefincopolymer mit einem Acrylat, ein Polyolefincopolymer mit einem Maleinsäureanhydridester oder ein mit einer oder mehreren Anhydridgruppen, Acrylatgruppen oder Carbonsäuregruppen gepfropftes Polyolefincopolymer ist.

6. Mehrschichtfolie nach Anspruch 4, wobei der Kompatibilitätsvermittler ein mit Maleinsäureanhydrid gepfropftes Polyethylen niedriger Dichte oder ein mit Maleinsäureanhydrid gepfropftes Polyethylen hoher Dichte ist.

7. Mehrschichtfolie nach einem der Ansprüche 4 bis 6, wobei der Kompatibilitätsvermittler in der Außenschicht in einer Menge von bis zu 10 Gewichtsprozent vorhanden ist, bezogen auf das Gesamtgewicht der Außenschicht.

8. Mehrschichtfolie nach einem der vorstehenden Ansprüche, wobei das erste Polyethylen und das zweite Polyethylen jeweils Polyethylen hoher Dichte sind.

9. Etikett, umfassend die Mehrschichtfolie nach einem der vorstehenden Ansprüche.

10. Verpackung, umfassend die Mehrschichtfolie nach einem der Ansprüche 1 bis 8.

## Revendications

1. Film multicouche ayant au moins une surface mate comprenant :
(a) une couche externe comprenant (i) 30 à 99,5 pour cent en poids d'un premier polyéthylène basse densité ayant une masse volumique de 0,919 g/cm³ à 0,940 g/cm³ mesurée selon la norme ASTM D792, méthode B, et un indice de fusion (I₂) de 0,3 à 5 g/10 minutes mesuré selon la norme ASTM D-1238 (méthode B) à 190 °C et à une charge de 2,16 kg, (ii) 0,1 à 20 pour cent en poids de particules de polymère ayant une structure cœur et écorce, dans lequel le cœur comprend un premier matériau polymère qui est élastomère et a un premier indice de réfraction mesuré selon la norme ASTM D542 et l'écorce comprend un second matériau polymère qui est thermoplastique et a un second indice de réfraction mesuré selon la norme ASTM D542 qui est différent du premier indice de réfraction, dans lequel l'indice de réfraction du polymère dans le cœur diffère de l'indice de réfraction du polymère dans l'écorce d'au moins 0,02 ou d'au moins 0,03, (iii) facultativement, jusqu'à 50 pour cent en poids d'un premier polyéthylène ayant une masse volumique de 0,925 g/cm³ à 0,970 g/cm³ mesurée selon la norme ASTM D792, méthode B, et un indice de fusion (I₂) de 0,8 à 10 g/10 minutes mesuré selon la norme ASTM D-1238 (méthode B) à 190 °C et à une charge de 2,16 kg, chacun étant basé sur le poids total de la couche externe ; et
(b) une seconde couche en contact adhérent avec la couche externe comprenant (i) 1 à 80 pour cent en poids d'un second polyéthylène basse densité ayant une masse volumique de 0,919 g/cm³ à 0,940 g/cm³ mesurée selon la norme ASTM D792, méthode B, et un indice de fusion (I₂) de 0,3 à 5 g/10 minutes mesuré selon la norme ASTM D-1238 (méthode B) à 190 °C et à une charge de 2,16 kg, et (ii) 20 à 99 pour cent en poids d'un second polyéthylène ayant une masse volumique de 0,925 g/cm³ à 0,970 g/cm³ mesurée selon la norme ASTM D792, méthode B, et un indice de fusion (I₂) de 0,8 à 10 g/10 minutes mesuré selon la norme ASTM D-1238 (méthode B) à 190 °C et à une charge de 2,16 kg, chacun étant basé sur le poids total de la seconde couche ; dans lequel la couche externe a une brillance inférieure à 50 %, telle que mesurée par la norme ASTM D2457 à un angle de 45°.

2. Film multicouche selon la revendication 1, dans lequel l'écorce comprend un polymère acrylique.

3. Film multicouche selon l'une quelconque des revendications précédentes, dans lequel les particules de polymère ont une taille moyenne de 1 à 10 microns.

4. Film multicouche selon l'une quelconque des revendications précédentes, dans lequel la couche externe comprend en outre un agent de compatibilité.

5. Film multicouche selon la revendication 4, dans lequel l'agent de compatibilité est un copolymère de polyoléfine avec de l'acide acrylique, un copolymère de polyoléfine avec un acrylate, un copolymère de polyoléfine avec un ester d'anhydride maléique, ou un copolymère de polyoléfine greffé avec un ou plusieurs groupes anhydride, groupe acrylate ou groupe acide carboxylique.

6. Film multicouche selon la revendication 4, dans lequel l'agent de compatibilité est un polyéthylène basse densité greffé par anhydride maléique ou un polyéthylène haute densité greffé par anhydride maléique.

7. Film multicouche selon l'une quelconque des revendications 4 à 6, dans lequel l'agent de compatibilité est présent dans la couche externe en une quantité allant jusqu'à 10 pour cent en poids sur la base du poids total de la couche externe.

8. Film multicouche selon l'une quelconque des revendications précédentes, dans lequel le premier polyéthylène et le second polyéthylène sont tous deux des polyéthylènes haute densité.

9. Étiquette comprenant le film multicouche selon l'une quelconque des revendications précédentes.

10. Conditionnement comprenant le film multicouche selon l'une quelconque des revendications 1 à 8.
